Europäisches Patentamt

European Patent Office

Office européen des brevets

(11) Numéro de publication : **0 431 997 B1**

## (12) FASCICULE DE BREVET EUROPEEN

(45) Date de publication du fascicule du brevet :
**02.03.94 Bulletin 94/09**

(51) Int. Cl.$^5$ : **G09B 9/24,** G09B 9/52,
G01C 21/00, G01C 21/24,
G05D 1/08

(21) Numéro de dépôt : **90403234.9**

(22) Date de dépôt : **15.11.90**

(54) **Procédé visualisation de l'attitude d'un aeronef, pour l'aide au pilotage dans l'espace.**

(30) Priorité : **17.11.89 FR 8915115**

(43) Date de publication de la demande :
**12.06.91 Bulletin 91/24**

(45) Mention de la délivrance du brevet :
**02.03.94 Bulletin 94/09**

(84) Etats contractants désignés :
**DE ES GB IT NL**

(56) Documents cités :
**EP-A- 0 247 265**
**US-A- 4 848 706**
**NEC - RESEARCH & DEVELOPMENT, no.
83,octobre 1986, pages 82-91, Tokyo, JP; K.
NINOMIYA et al.: "Attitude and orbitcontrol
system of the Japanese Halley's comet explorers "SAKIGAKE" and"SUISEI""**

(56) Documents cités :
**JOURNAL OF GUIDANCE, CONTROL & DYNA-
MICS, vol. 11, no. 2,mars/avril 1988, pages
110-118, Washington, DC, US; S.D. LAMBROS
et al.:"Navigation and pointing timeline development for an automonous free-flyingshuttle
payload"**

(73) Titulaire : **AEROSPATIALE Société Nationale
Industrielle
37, Boulevard de Montmorency
F-75781 Paris Cédex 16 (FR)**

(72) Inventeur : **Ferro, Vincent Daniel
3 rue Joseph Vie
F-31300 Toulouse (FR)**

(74) Mandataire : **Mongrédien, André et al
c/o SOCIETE DE PROTECTION DES
INVENTIONS 25, rue de Ponthieu
F-75008 Paris (FR)**

## Description

La présente invention concerne un procédé de visualisation de l'attitude d'un aéronef, pour l'aide au pilotage dans l'espace. Elle s'applique plus particulièrement à la visualisation ergonomique et de l'attitude d'un aéronef dans l'espace, ainsi qu'à la visualisation de valeurs de vitesses angulaires de déplacement de celui-ci.

Elle s'applique aussi à la visualisation simultanée de la position d'un autre objet tel qu'un satellite spatial se déplaçant dans l'espace environnant.

On ne sait pas actuellement visualiser de façon précise et ergonomique, l'attitude d'un aéronef, et plus précisément celle d'un véhicule spatial, tel qu'une "navette". On connait seulement, pour les avions, des procédés qui consistent à utiliser des dispositifs électromécaniques appelés "boules d'avion", ou des dispositifs à écran de visualisation, qui permettent à un pilote de connaître l'attitude de l'avion, dans un domaine spatial restreint, de quelques degrés seulement par rapport à l'horizon.

En effet, l'attitude d'un avion est généralement indiquée par les valeurs des trois angles de Cardan (Roulis ($\varphi$), tangage ($\theta$) et lacet ($\Psi$) ) définies dans un repère de référence ; cette attitude représentée dans un repère lié à l'avion, perd toute précision lorsque l'angle de tangage est voisin de $\pm$ 90°. Lorsqu'un avion de chasse monte en chandelle par exemple, les indications fournies par la "boule avion" sont incohérentes par suite des oscillations de la boule. Ces indications sont également incohérentes près des "pôles" (au voisinage des pôles, $\theta$ est voisin de $\pm$ 90°).

Les procédés qui utilisent des dispositifs à écrans de visualisation couplés avec des systèmes électroniques de mesure d'attitude, ne sont généralement pas plus performants que ceux qui utilisent La "boule avion" ; ils ne fournissent que des indications imprécises de l'attitude de l'avion, dès que l'angle de tangage dépasse 80°, ou que l'avion navigue à proximité des pôles.

Ces inconvénients des procédés existants, utilisés pour des avions, deviennent des inconvénients majeurs pour l'aide au pilotage d'un aéronef, dans l'espace.

L'invention a précisément pour but de remédier à ces inconvénients grâce à un procédé de visualisation sur un écran de l'évolution d'un aéronef (notamment d'une navette spatiale) qui, tout en fournissant des indications ergonomiques de l'attitude de l'aéronef, ainsi que d'autres indications utiles à son pilotage, permet également d'obtenir des indications précises d'attitude, notamment au voisinage des pôles.

Ces buts sont atteints, notamment grâce à un repérage de l'attitude de l'aéronef, dans un canevas de la voûte céleste projeté partiellement sur un plan perpendiculaire à l'axe de l'aéronef et affiché sur un écran de moyens embarqués de visualisation.

L'invention concerne un procédé de visualisation d'un aéronef pour l'aide au pilotage dans l'espace, caractérisé en ce qu'il consiste :

- à définir une voûte céleste sphérique centrée au centre de gravité de l'aéronef, ayant un axe polaire orienté vers le nord céleste et un plan équatorial perpendiculaire à cet axe polaire et passant par un point vernal de repérage ;
- à définir des méridiens et des parallèles de repérage sur cette voûte céleste ;
- à définir un repère de référence à axes orthogonaux, centré au centre de gravité de l'aéronef, un premier axe de ce repère passant par le point vernal, un second axe étant confondu avec l'axe polaire, et un troisième axe étant perpendiculaire aux premier et second axes ;
- à définir un repère spécifique de l'aéronef, à trois axes orthogonaux, ayant pour origine le centre de gravité de l'aéronef, un premier axe dirigé selon un axe longitudinal de l'aéronef, un second axe situé dans un plan de symétrie passant par l'axe longitudinal de l'aéronef, un troisième axe perpendiculaire aux premier et second axes du repère spécifique ;
- à définir l'attitude de l'aéronef en calculant les angles de Cardan, dits de roulis, de tangage et de lacet de l'aéronef, vis-à-vis du repère de référence ;
- à utiliser les valeurs des angles de cardan pour visualiser, sur un écran de moyens de visualisation, l'image obtenue dans un plan perpendiculaire au premier axe spécifique, d'un canevas formé de portions de méridiens et de parallèles de la voûte céleste projetées sur ce plan à l'intérieur d'un cercle de pilotage, visualisé sur l'écran et centré sur le premier axe du repère spécifique ;
- à visualiser un réticule cruciforme à deux segments perpendiculaires intersectant le cercle de pilotage, se coupant au centre du cercle et correspondant respectivement aux deuxième et troisième axes du repère spécifique, le centre du cercle représentant respectivement les angles de lacet et de tangage repérés en longitude et en latitude, respectivement par rapport à une portion de méridien et une portion de parallèle du canevas ;
- à visualiser la valeur de l'angle de roulis dans une échelle de valeurs numériques, voisine de l'intersection du cercle de pilotage avec le segment du réticule correspondant au deuxième axe du repère spécifique.

Selon une autre caractéristique de l'invention, le procédé consiste, dans une zone circulaire prédéterminée autour de chaque pôle de la voûte céleste, à remplacer la visualisation d'un canevas de portions de méridiens et de parallèles de la voûte céleste, par un canevas formant une grille de repérage à l'intérieur d'un cercle délimitant ladite zone.

Selon une autre caractéristique, le procédé consiste à exprimer les angles de cardan sous forme de quaternions, pour visualiser ledit canevas.

Selon une autre caractéristique, le procédé consiste à visualiser par un symbole dans le canevas, l'emplacement pointé sur la voûte céleste par un vecteur représentant la vitesse de l'aéronef, ce symbole étant repéré dans le canevas, en longitude et en latitude, pour indiquer respectivement les angles de lacet ( $\Psi$ ) et de tangage ($\theta$) de l'aéronef.

Selon une autre caractéristique, on visualise la position d'un autre objet dans l'espace, par un symbole caractéristique de cet objet, repéré dans le canevas par une longitude et une latitude correspondant à cette position.

Selon une autre caractéristique, on visualise en outre un vecteur de prédiction à court terme, de l'attitude de l'aéronef.

Selon une autre caractéristique, on visualise une attitude sélectée de l'aéronef, par un symbole d'attitude repéré dans le canevas par une longitude et une latitude.

Selon une autre caractéristique, on visualise de façon particulière une portion de méridien 0-180° parmi les portions de méridiens visualisés dans le canevas.

Selon une autre caractéristique, on visualise deux symboles de références d'angles de roulis, diamétralement opposés sur le cercle de pilotage , et on visualise sur le cercle de pilotage un symbole intermédiaire d'angle de roulis sélecté.

Selon une autre caractéristique, on visualise respectivement des valeurs de vitesses de variation (p, q, r) des angles de roulis, de tangage et de lacet, dans des curseurs mobiles vis-à-vis d'échelles fixes de valeurs.

Les valeurs (p, q, r) sont les valeurs des longueurs des projections du vecteur vitesse instantanée de rotation de l'aéronef sur les trois axes X,Y,Z du repère spécifique, respectivement.

Selon une autre caractéristique, on visualise les valeurs numériques respectives des angles ($\varphi$, $\theta$ et $\Psi$) de roulis, de tangage et de lacet.

Selon une autre caractéristique, le procédé consiste à visualiser des valeurs numériques de consignes respectives des angles de roulis, de tangage et de lacet.

Selon une autre caractéristique, le procédé consiste à affecter des codes de couleurs spécifiques aux différentes indications visualisées.

Selon une autre caractéristique, le procédé consiste à visualiser l'attitude dans un repère quelconque.

Les caractéristiques et avantages de l'invention ressortiront mieux de la description qui va suivre, donnée en référence aux dessins annexés dans lesquels :

- la figure 1 représente schématiquement un aéronef évoluant dans la voûte céleste et un découpage de cette voûte, pour le repérage de la position et de l'attitude de cet aéronef ;
- la figure 2 permet de mieux comprendre la définition des angles de Cardan ;
- la figure 3 représente schématiquement la projection d'une portion de voûte céleste, sur un plan perpendiculaire à l'axe de l'aéronef, utilisée dans le procédé de visualisation de l'invention ;
- la figure 4 représente schématiquement les différentes indications visualisées selon le procédé de l'invention, sur l'écran de moyens de visualisation embarqués à bord de l'aéronef ;
- la figure 5 représente schématiquement un système permettant de mettre en oeuvre le procédé de l'invention.

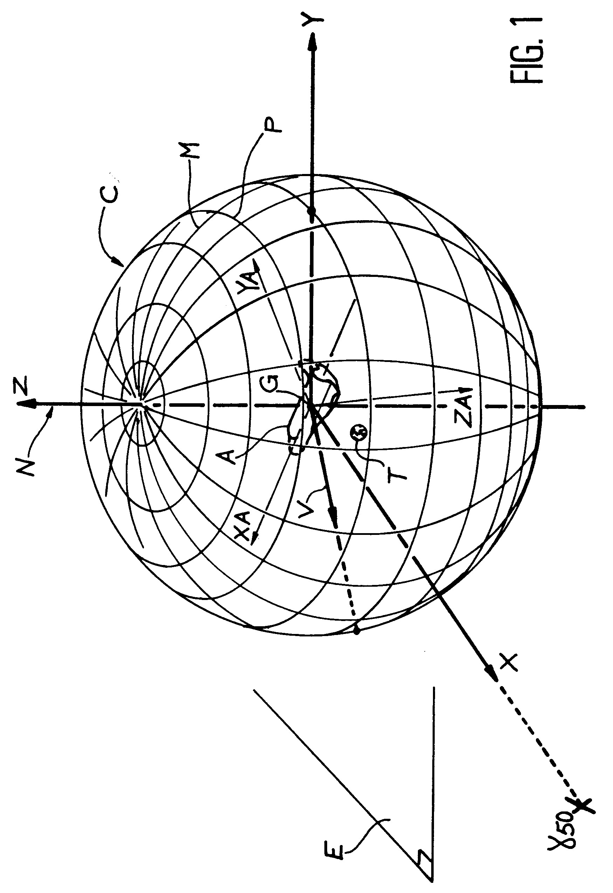

La figure 1 représente schématiquement une "voûte céleste" sphérique C, centrée au centre de gravité de l'aéronef A (une navette spatiale par exemple). La terre est représentée en T ; la voûte céleste (C) présente un axe polaire orienté vers le nord céleste N, et un plan équatorial E, perpendiculaire à l'axe polaire et passant par un point vernal. Ce point vernal est ici le point $\gamma$ 50 qui, à l'équinoxe de printemps de l'année 1950, représentait le point d'intersection de l'équateur terrestre et de l'écliptique, lors du passage du soleil de l'hémisphère austral à l'hémisphère boréal.

Selon le procédé de l'invention, on définit des méridiens M et des parallèles P de repérage de l'attitude de l'aéronef A sur cette voûte céleste. Les méridiens M sont définis par les intersections de la voûte sphérique avec des plans passant par l'axe polaire de cette voûte. Les parallèles P sont définis par les intersections de la voûte sphérique, avec des plans parallèles au plan équatorial E. Les méridiens M sont repérés par une longitude, comptée positivement vers l'est, et les parallèles sont repérés par une latitude, comptée positivement vers le nord céleste N.

Le procédé consiste ensuite à définir un repère de référence (G, X, Y, Z), à axes orthogonaux et un repère

3

spécifique (G, $X_A$, $Y_A$, $Z_A$) de l'aéronef.

Le repère de référence a pour origine le centre de gravité G de l'aéronef A. Un premier axe X de ce repère de référence passe par le point vernal $\gamma$50, un second axe Z est dirigé vers le nord céleste N, et un troisième axe Y qui est perpendiculaire aux premier et second axes X, Z est situé dans le plan équatorial E de la voûte céleste.

Le repère spécifique de l'aéronef a lui aussi pour origine le centre de gravité G de l'aéronef ; il comporte un premier axe $X_A$ dirigé selon un axe longitudinal de l'aéronef, un second axe $Z_A$ situé dans un plan de symétrie de l'aéronef, et un troisième axe $Y_A$ perpendiculaire aux premier et second axes $X_A$, $Z_A$ du repère spécifique.

Selon le procédé, on définit ensuite l'attitude de l'aéronef, notamment grâce à des moyens de traitement inertiels embarqués, en calculant les angles de roulis ($\varphi$), de tangage ($\theta$) et de Lacet ($\Psi$) de l'aéronef A, vis-à-vis du repère de référence (G, X, Y, Z).

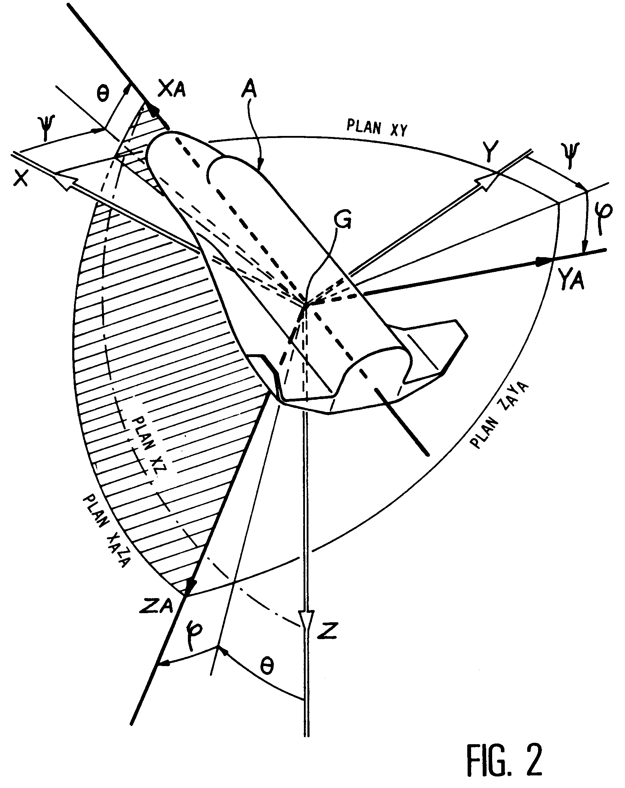

Le calcul de ces angles est bien connu dans l'état de la technique ; toutefois, pour une meilleure compréhension, la figure 2 permet de donner la définition de ces angles.

L'angle de lacet $\Psi$ est l'angle de rotation, autour de l'axe Z du repère de référence, qui amène l'axe X de ce repère de référence, en coïncidence avec la projection de l'axe $X_A$ du repère spécifique sur le plan XY.

L'angle de tangage $\theta$ est l'angle de rotation autour de l'axe Y, qui amène la projection de l'axe $X_A$ du repère spécifique sur le plan XY du premier repère, en coïncidence avec l'axe $X_A$.

L'angle de roulis $\varphi$ est l'angle de rotation autour de l'axe $X_A$ du repère spécifique, qui amène la projection de l'axe $Y_A$ de ce repère spécifique sur le plan XY du premier repère, en coïncidence avec l'axe Y du repère de référence.

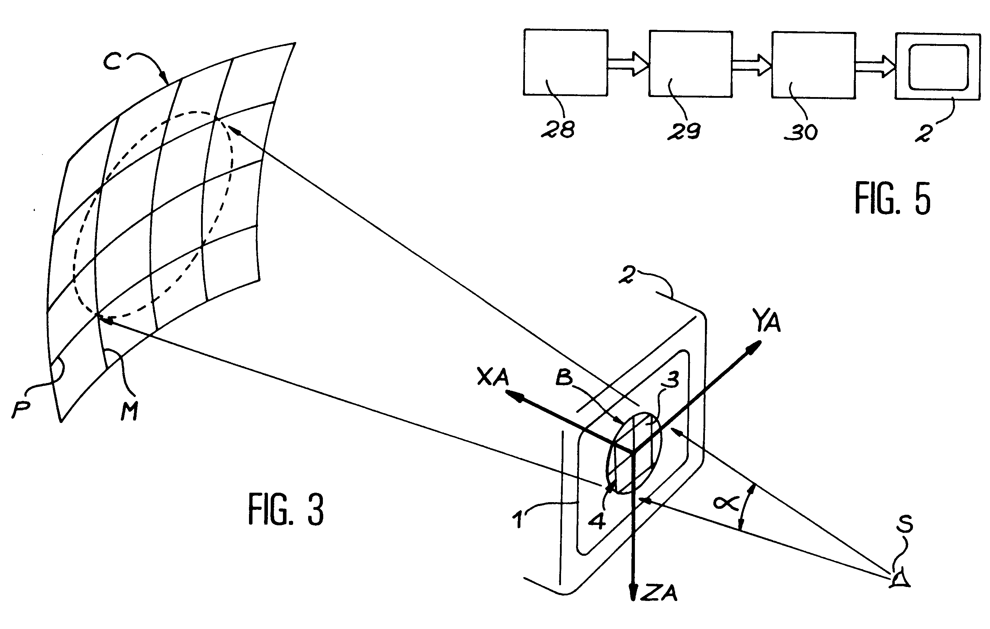

Le procédé consiste ensuite, comme le montre la figure 3, à utiliser les valeurs de ces angles de cardan, pour visualiser sur un écran 1 de moyens de visualisation 2, l'image 3 obtenue dans un plan perpendiculaire au premier axe $X_A$ du repère spécifique, d'un canevas 4 formé de portions de méridiens M et de parallèles P de la voûte céleste C, projetées sur ce plan perpendiculaire à l'intérieur d'un cercle B. Ce cercle qui peut être qualifié de "cercle de pilotage", est centré sur le premier axe $X_A$ du repère spécifique.

Il est déterminé par exemple par l'intersection du plan image, avec un cône ayant pour axe, l'axe $X_A$ du repère spécifique, d'angle au sommet ($\alpha$) voisin de 30° par exemple ; le sommet S de ce cône, correspond à l'emplacement de l'oeil de l'observateur (le pilote de l'aéronef).

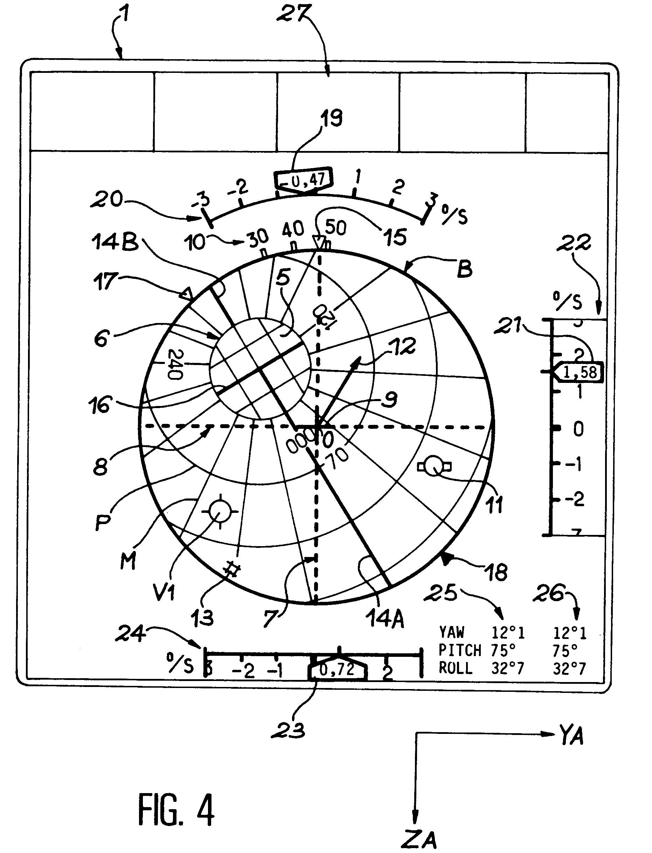

La figure 4 va permettre de mieux comprendre les différentes indications visualisées sur l'écran 1 des moyens de visualisation embarqués à bord de l'aéronef.

On distingue tout d'abord sur cet écran, le cercle de pilotage B et le canevas de portions de méridiens M et de parallèles P, projetées comme indiqué plus haut sur un plan perpendiculaire à l'axe $X_A$ du repère spécifique, à l'intérieur du cercle B. Il est évident que l'écran n'est pas obligatoirement perpendiculaire à l'axe $X_A$ du repère spécifique, mais qu'il peut occuper n'importe quelle position à l'intérieur de l'aéronef. C'est en fait le plan image qui est perpendiculaire à l'axe $X_A$. Les moyens de visualisation permettent de visualiser le plan image sur l'écran 1.

Sur la figure 4, on a supposé que le canevas visualisé est une portion de la voûte céleste correspondant à un déplacement de l'aéronef au voisinage de l'un des pôles de cette voûte. Dans ces conditions et de façon connue en cartographie, le canevas de méridiens et de parallèles est remplacé par un autre canevas de repérage 5, formant une grille de segments croisés, à l'intérieur d'une zone délimitée par un cercle 6, centré sur le pôle de la voûte céleste. Le procédé consiste aussi à visualiser un réticule cruciforme à deux segments perpendiculaires 7, 8, intersectant le cercle de pilotage B, se coupant au centre O de ce cercle, et correspondant respectivement aux axes $Z_A$ et $Y_A$ du repère spécifique. Le point O correspond au centre de gravité de l'aéronef.

La croix centrale 9 du réticule, qui permet de mieux repérer le centre O, figure l'aéronef lui-même et définit ses angles de lacet $\Psi$ et de tangage $\theta$, qui sont respectivement repérés en longitude et en latitude, par rapport à une portion de méridien et une portion de parallèle, proches de cette croix dans le canevas apparaissant sur l'écran.

Selon le procédé de l'invention, la valeur de l'angle de roulis $\varphi$ est visualisée dans une échelle 10 de valeurs numériques, voisine de l'intersection du cercle de pilotage B avec le segment correspondant 7 du réticule, Dans l'exemple considéré, l'angle de roulis $\varphi$ est voisin de 48°.

Les indications visualisées qui viennent d'être décrites sont celles qui sont essentielles au pilotage. D'autres indications sont aussi visualisées ; elles seront décrites ultérieurement.

Les indications essentielles et notamment le canevas, sont visualisées à partir d'un traitement direct des valeurs des angles de Cardan. Toutefois, dans un mode préféré de mise en oeuvre du procédé de l'invention, celui-ci consiste à exprimer les angles de Cardan sous forme de "quarternions", pour déterminer le tracé du canevas sur l'écran. La théorie des quaternions est décrite notamment dans le livre intitulé "Les quaternions" par Paul Fayet de Casteljau - Editions HERMES.

En effet, s'il est possible de tracer le canevas sur l'écran, directement à partir des angles de Cardan ( $\varphi$

4

(roulis) θ (tangage) et Ψ (lacet)), fournis par les moyens inertiels embarqués (l'axe $X_A$ de l'avion pointant vers la voûte céleste), ce tracé perd toute précision, lorsque θ est voisin de 90°, c'est-à-dire près des pôles. Près des pôles, les valeurs des angles de lacet et de roulis perdent toute signification. On préfère donc pour les valeurs de θ dépassant 80° remplacer le canevas de méridiens et de parallèles par une représentation "grille" et, quelle que soit la valeur de θ, utiliser des quaternions pour tracer le canevas. Grâce aux quaternions, la représentation d'attitude de l'aéronef varie de façon continue, quelle que soit la valeur de θ. Le quaternion q se définit de la manière suivante :

$$q = q1 + q2.\vec{i} + q3.\vec{j} + q4.\vec{k}$$

ou encore

$$q = \begin{bmatrix} q1 \\ q2 \\ q3 \\ q4 \end{bmatrix}$$

q1, q2, q3, q4 varient de façon continue, même au voisinage des pôles.

Les relations entre les angles de Cardan et le quaternion sont :

$$q1 = \cos(Ψ/2)\cos(θ/2)\cos(φ/2) + \sin(Ψ/2)\sin(θ/2)\sin(φ/2)$$
$$q2 = \cos(Ψ/2)\cos(θ/2)\sin(φ/2) - \sin(Ψ/2)\sin(θ/2)\cos(φ/2)$$
$$q3 = \cos(Ψ/2)\sin(θ/2)\cos(φ/2) + \sin(Ψ/2)\cos(θ/2)\sin(φ/2)$$
$$q4 = \sin(Ψ/2)\cos(θ/2)\cos(φ/2) - \cos(Ψ/2)\sin(θ/2)\sin(φ/2)$$

Les angles Ψ, θ, φ apparaissant dans ces relations sont les angles de Cardan qui permettent de passer du repère de référence (G, X, Y, Z) au repère spécifique (G, XA, YA, ZA).

Les relations connues de changement de repère s'écrivent :

$$\begin{bmatrix} XA \\ YA \\ ZA \end{bmatrix} = \begin{bmatrix} A \end{bmatrix} \begin{bmatrix} X \\ Y \\ Z \end{bmatrix}$$

avec :

$$A = \begin{pmatrix} \cos θ \cos Ψ & \cos θ \sin Ψ & -\sin θ \\ -\cos φ \sin Ψ + \sin θ \sin φ \cos Ψ & \cos φ \cos Ψ + \sin θ \sin φ \sin Ψ & \cos θ \sin φ \\ \sin φ \sin Ψ + \sin θ \cos φ \cos Ψ & -\sin φ \cos Ψ + \sin θ \cos φ \sin Ψ & \cos θ \cos φ \end{pmatrix}$$

On peut définir un repère spécifique intermédiaire (G, X'A, Y'A, Z'A) lié à l'aéronef, plus approprié au pilotage, en faisant tourner le repère spécifique (G, XA, YA, ZA) de 180°, autour de l'axe $X_A$. C'est à partir du repère spécifique intermédiaire (G, X'A, Y'A, Z'A) que peut être défini un repère de référence de visualisation ou repère de référence image.

On peut écrire :

$$
\begin{bmatrix} X'A \\ Y'A \\ Z'A \end{bmatrix} = \begin{bmatrix} 1 & 0 & 0 \\ 0 & -1 & 0 \\ 0 & 0 & -1 \end{bmatrix} \cdot \begin{bmatrix} A \end{bmatrix} \cdot \begin{bmatrix} X \\ Y \\ Z \end{bmatrix}
$$

En combinant cette dernière relation avec l'expression de la matrice de passage A exprimée sous forme de quaternion, on obtient :

$$
\begin{bmatrix} X \\ Y \\ Z \end{bmatrix} = \begin{bmatrix} B \end{bmatrix} \cdot \begin{bmatrix} X'A \\ Y'A \\ Z'A \end{bmatrix}
$$

avec

$$
\begin{bmatrix} B \end{bmatrix} = \begin{bmatrix} b11 & b12 & b13 \\ b21 & b22 & b23 \\ b31 & b32 & b33 \end{bmatrix}
$$

Dans cette matrice :

$$
\left.
\begin{aligned}
b11 &= 2(q1^2 + q2^2) - 1 \\
b21 &= 2(q2 \cdot q3 + q1 \cdot q4) \\
b31 &= 2(q2 \cdot q4 - q1 \cdot q3) \\
b12 &= 2(q1 \cdot q4 - q2 \cdot q3) \\
\\
b22 &= 1 - 2(q1^2 + q3^2) \\
b32 &= -2(q1 \cdot q2 + q3 \cdot q4) \\
b13 &= -2(q2 \cdot q4 + q1 \cdot q3) \\
b23 &= 2(q1 \cdot q2 - q3 \cdot q4) \\
\\
b33 &= 1 - 2(q1^2 + q4^2)
\end{aligned}
\right\} \quad (E1)
$$

Le dernier repère à définir est le repère de référence de visualisation. Ce repère a pour origine le point milieu de l'écran de visualisation.

Par rapport au repère spécifique intermédiaire (G, X'A, Y'A, Z'A), le repère de référence de visualisation (O, x, y, z) peut être défini de la manière suivante :

Son origine O est située dans le poste de pilotage de l'aéronef. On suppose que le point O est placé à la distance 1 du centre de la voûte céleste et que ses coordonnées par rapport au repère spécifique intermédiaire sont (1,0,0).

Son axe x est confondu avec l'axe $Y_A$ du repère spécifique de l'aéronef.

Son axe y est confondu avec l'axe $Z_A$

Son axe z est confondu avec l'axe $X_A$.

Les systèmes d'équations permettant de passer des coordonnées d'un point dans le repère de référence (G, X, Y, Z) aux coordonnées de ce point dans le repère de référence de visualisation (o, x, y, z), sont a lors les suivants :

$$\begin{pmatrix} X \\ Y \\ Z \end{pmatrix} = \begin{pmatrix} b11 & b12 & b13 \\ b21 & b22 & b23 \\ b31 & b32 & b33 \end{pmatrix} \cdot \begin{pmatrix} 1-z \\ -x \\ y \end{pmatrix} \qquad (E2)$$

$$\begin{pmatrix} 1-z \\ -x \\ y \end{pmatrix} = \begin{pmatrix} b11 & b21 & b31 \\ b12 & b22 & b32 \\ b13 & b23 & b33 \end{pmatrix} \cdot \begin{pmatrix} x \\ Y \\ Z \end{pmatrix} \qquad (E3)$$

C'est donc le système d'équation (E3) qui est utilisé pour la visualisation du canevas qui est utilisé pour la visualisation du canevas sur l'écran de visualisation, ainsi orienté selon les conventions propres au pilotage;

Le tracé du canevas "grille" au voisinage des calotes polaires (au-delà de $|\theta| = 80°$) s'obtient de la même manière que le canevas tracé en dehors de ces calotes polaires, mais en choisissant un changement de repère de référence, dans lequel le nouvel axe X passe par le pôle.

Le procédé permet aussi de visualiser dans le canevas affiché sur l'écran par un symbole V1, l'emplacement repéré par un méridien et un parallèle pointés sur la voûte céleste, par un vecteur $\vec{V}$ représentant la vitesse de l'aéronef. Ce symbole V est repéré dans le canevas en longitude et en latitude. Il permet d'indiquer au pilote la direction de déplacement de l'aéronef, qui est généralement différente de celle de l'axe longitudinal $X_A$ de cet aéronef. Cette direction est calculée à partir des valeurs des angles de gîte, incidence et dérapage inertiels.

Selon l'invention, on visualise aussi sur l'écran, la position d'un autre objet dans l'espace. Cette position est visualisée par par un symbole 11, repéré dans le canevas, par une latitude et une longitude, respectivement par rapport à une portion de parallèle et une portion de méridien, les plus proches du symbole 11 dans le canevas. Cet autre objet peut être, par exemple, une station orbitale à laquelle l'aéronef doit s'arrimer. La position de cette station est obtenue elle aussi, à partir d'un calcul de quaternion.

Une autre indication importante est celle qui concerne la prédiction d'attitude de l'aéronef. C'est par exemple l'attitude prévue de l'aéronef dans les 10 secondes suivantes. Cette indication est fournie par un vecteur 12, qualifié de "vecteur de prédiction d'attitude". Cette prédiction est calculée par un ordinateur embarqué, notamment à partir des valeurs des vitesses de variation des angles de Cardan. Ce vecteur indique la future orientation de l'axe longitudinal XA de l'aéronef.

Afin de mieux guider le pilote dans la commande d'évolution de l'aéronef, il est aussi possible, selon le procédé de l'invention, de sélectionner une attitude de référence. Le pilote, en agissant sur les commandes de vol doit agir pour orienter l'aéronef selon cette attitude de référence. L'attitude de référence sélectée est visualisée par un symbole d'attitude, 13 repéré dans le canevas par une longitude et par une latitude, respectivement par rapport à une portion de méridien et une portion de parallèle du canevas.

Afin de faciliter les repérages en longitude, le procédé consiste à visualiser de façon particulière une portion de méridien origine. Cette visualisation du méridien origine est représentée par les segments 14A, 14B sur la figure.

On a aussi représenté sur cette figure une portion 16 de méridien, perpendiculaire au méridien origine, visualisée à l'intérieur du cercle 6 délimitant la zone de visualisation de la calote polaire.

Deux symboles 17, 18 de références d'angle de roulis, sont aussi visualisés sur le cercle de pilotage B. Ces symboles sont diamétralement opposés sur le cercle. Ils facilitent la perception immédiate approximative de l'angle de roulis. La connaissance exacte de l'angle de roulis est complétée par les valeurs numériques 10 décrites plus haut, et indiquant avec plus de précision, la valeur de cet angle. Il est également possible de visualiser un symbole intermédiaire 15, d'angle de roulis sélecté. Il est en effet utile au pilote de sélectionner une valeur d'angle de roulis de référence, pour agir sur les commandes de vol de l'aéronef, de manière que celui-ci conserve une attitude respectant cet angle de roulis.

Le procédé consiste aussi à visualiser respectivement des valeurs de vitesses de variation (p, q, r) de roulis, de tangage et de lacet, dans des curseurs mobiles vis-à-vis d'échelles fixes.

C'est ainsi que la vitesse p de variation de roulis, est visualisée par une valeur numérique, dans le curseur 19, mobile vis-à-vis de l'échelle fixe 20. Dans l'exemple représenté, cette valeur est égale à -0,47°/S. La position du curseur indique la tendance du roulis vers la droite ou vers la gauche. Dans l'exemple, la tendance est vers la gauche.

La vitesse q de variation de tangage est visualisée par une valeur numérique, dans le curseur 21 mobile vis-à-vis de l'échelle fixe 22. Dans l'exemple représenté, cette valeur est égale à +1,58°/S. La position du curseur indique la tendance du tangage vers le haut ou vers le bas. Dans l'exemple représenté, cette tendance est vers le haut.

Enfin, la vitesse de variation de lacet est visualisée par une valeur numérique, dans le curseur 23 mobile vis-à-vis de l'échelle fixe 24. Dans l'exemple représenté, cette valeur est égale à +0,72°/S. La position du curseur indique la tendance du lacet qui est ici vers la droite.

Les valeurs numériques des angles de lacet, de tangage et de roulis, sont respectivement visualisées dans une zone 25, en regard des indications YAW, PITCH, ROLL. Dans l'exemple considéré, ces valeurs numériques sont respectivement égales à (12,1°), (75°) et (32°7).

Il est également possible de visualiser dans une zone 26 des va leurs numériques respectives de consigne pour les angles de lacet, de tangage et de roulis.

Enfin, dans une zone 27, peuvent être affichées des informations d'aide au pilotage par exemple.

Des codes de couleurs spécifiques sont affectés aux différentes indications visualisées. Ces codes de couleurs sont par exemple les suivants :
- le fond de l'écran est noir,
- le cercle de pilotage B, le canevas de méridiens et de parallèles, la grille et le cercle 6, les lignes 14A, 14B, 16, les échelles 20, 22, 24, les indications YAW, PITCH, ROLL, les symboles 17, 18, et les valeurs 10 de roulis sont de couleur blanche,
- les curseurs mobiles 19, 21, 23 et le réticule cruciforme 7, 8, 9 sont de couleur jaune ; les valeurs numériques contenues dans les curseurs sont de couleur verte,
- le vecteur 12 de prédiction d'attitude, le symbole de vitesse V1, les valeurs numériques de la zone 25 et les informations de la zone 27 sont de couleur verte,
- les symboles 13 et 11 de consigne d'attitude de l'aéronef et d'attitude de station, le symbole 15 de consigne de roulis et les valeurs numériques de la zone 26, sont de couleur bleue.

La figure 5 représente schématiquement un système embarqué permettant de mettre en oeuvre Le procédé de l'invention. Ce système comporte une centrale inertielle 28 fournissant des signaux représentatifs des angles de Cardan. Cette centrale inertiel le est reliée à un ensemble de calcul et de traitement 29 calculant notamment les quaternions et fournissant sur des sorties, des informations relatives aux indications à visualiser; ces informations sont reçues par un générateur graphique 30 qui commande les moyens de visualisation 2, pour visualiser les indications décrites plus haut, en respectant notamment les codes de couleurs choisis.

Dans le procédé qui vient d'être décrit, l'affichage de l'attitude pourrait être effectué dans un repère quelconque déduit du repère de référence.

## Revendications

1. Procédé de visualisation de l'attitude d'un aéronef pour l'aide au pilotage dans l'espace, caractérisé en ce qu'il consiste :
   - à définir une voûte céleste sphérique (C) centrée au centre de gravité (G) de l'aéronef (A), ayant un axe polaire orienté vers le nord céleste (N) et un plan équatorial (E) perpendiculaire à cet axe polaire et passant par un point vernal ($\gamma$ 50) de repérage ;
   - à définir des méridiens et des parallèles (M,P) de repérage sur cette voûte céleste ;
   - à définir un repère de référence (G, X, Y, Z) à axes orthogonaux, centré au centre de gravité (G) de l'aéronef, un premier axe (X) de ce repère passant par le point vernal ($\gamma$ 50), un second axe (2) étant confondu avec l'axe polaire, et un troisième axe (Y) étant perpendiculaire aux premier et second axes ;
   - à définir un repère (G, $X_A$, $Y_A$, $Z_A$) spécifique de l'aéronef, à trois axes orthogonaux, ayant pour origine le centre de gravité (G) de l'aéronef, un premier axe ($X_A$) dirigé selon un axe longitudinal de l'aéronef, un second axe ($Z_A$) situé dans un plan de symétrie passant par l'axe longitudinal de l'aéronef, un troisième axe ($Y_A$) perpendiculaire aux premier et second axes du repère spécifique ;
   - à définir l'attitude de l'aéronef en calculant les angles de roulis ($\varphi$), de tangage ($\theta$) et de lacet ($\Psi$) de l'aéronef, vis-à-vis du repère de référence (G, X, Y, Z) ;
   - à utiliser les valeurs des angles de cardan ($\varphi$, $\theta$, $\Psi$) pour visualiser, sur un écran (1) de moyens de visualisation (2), l'image obtenue dans un plan perpendiculaire au premier axe spécifique ($X_A$), d'un canevas formé de portions de méridiens et de parallèles (M,P) de la voûte céleste, projetées sur ce plan à l'intérieur d'un cercle de pilotage (B), visualisé sur l'écran (1) et centré sur le premier axe ($X_A$) du repère spécifique ;

- à visualiser un réticule cruciforme (7, 8, 9) à deux segments perpendiculaires (7, 8) intersectant le cercle de pilotage, se coupant au centre (O) du cercle de pilotage (B) et correspondant respectivement aux deuxième et troisième axes ($Z_A$, $Y_A$) du repère spécifique, le centre (O) du cercle de pilotage représentant l'attitude de l'aéronef (A), repérée en longitude et en latitude, respectivement par rapport à une portion de méridien (M) et une portion de parallèle (P) du canevas ;

- à visualiser la valeur de l'angle de roulis ( $\varphi$ ) dans une échelle (10) de valeurs numériques, voisine de l'intersection du cercle de pilotage (B) avec le segment (7) du réticule correspondant au deuxième axe ($Z_A$) du repère spécifique.

2. Procédé selon la revendication 1, caractérisé en ce que, dans une zone circulaire (5) prédéterminée autour de chaque pôle de la voûte céleste, il consiste à remplacer la visualisation d'un canevas de portions de méridiens et de parallèles de la voûte céleste, par un canevas formant une grille de repérage à l'intérieur d'un cercle (6) délimitant ladite zone.

3. Procédé selon la revendication 2, caractérisé en ce qu'il consiste à exprimer les angles de Cardan ( $\varphi$, $\theta$, $\Psi$) sous forme de quaternions.

4. Procédé selon la revendication 3, caractérisé en ce qu'il consiste à visualiser par un symbole (V1) dans le canevas, l'emplacement pointé sur la voûte céleste, par un vecteur représentant la vitesse de l'aéronef (A), ce symbole étant repéré dans le canevas en longitude et en latitude, pour indiquer respectivement les angles de dérapage et d'incidence de l'aéronef.

5. Procédé selon la revendication 3, caractérisé en ce qu'il consiste à visualiser la position d'un autre objet dans l'espace par un symbole (11) caractéristique de cet objet, repéré dans le canevas par une longitude et une latitude correspondant à cette position.

6. Procédé selon la revendication 3, caractérisé en ce qu'il consiste à visualiser en outre un vecteur (12) de prédiction à court terme, de l'attitude de l'aéronef.

7. Procédé selon La revendication 3, caractérisé en ce qu'il consiste à visualiser l'attitude sélectée de l'aéronef, par un symbole d'attitude (13) repéré dans le canevas par une longitude et une latitude.

8. Procédé selon la revendication 3, caractérisé en ce qu'il consiste en outre à visualiser de façon particulière une portion de méridien origine (14, 15) parmi les portions de méridiens visualisées dans le canevas.

9. Procédé selon la revendication 8, caractérisé en ce qu'il consiste en outre à visualiser deux symboles (17, 18) de références d'angle de roulis ( $\varphi$ ), diamétralement opposés sur le cercle de pilotage (8), et à visualiser sur le cercle de pilotage un symbole intermédiaire (19) d'angle de roulis sélecté.

10. Procédé selon la revendication 3, caractérisé en ce qu'il consiste à visualiser respectivement des valeurs numériques de vitesses (p, q, r) de roulis, de tangage et de lacet, dans des curseurs (19, 21, 23) mobiles vis-à-vis d'échelles fixes (20, 22, 24) de valeurs numériques.

11. Procédé selon la revendication 3, caractérisé en ce qu'il consiste à visualiser les valeurs numériques (25) respectives des angles ($\varphi$, $\theta$, $\Psi$) de roulis, de tangage et de lacet.

12. Procédé selon la revendication 11, caractérisé en ce qu'il consiste à visualiser des va leurs numériques (26) de consignes respectives des angles de roulis, de tangage et de lacet.

13. Procédé sélon une de revendications précédentes caractérisé en ce qu'il consiste à affecter des codes de couleurs spécifiques aux différentes indications visualisées.

**Patentansprüche**

1. Verfahren zum Anzeigen der Lage eines Raumfahrzeugs für Navigationshilfe im Raum,

dadurch **gekennzeichnet,**

daß es darin besteht:

- ein kugelförmiges Himmelsgewölbe zu definieren, zentriert im Schwerpunkt (G) des Raumfahrzeugs (A), mit einer Polarachse in nördlicher Himmelsrichtung (N) und einer Äquatorialebene (E), senkrecht zu dieser Polarachse und einen Bezugs-Frühlingspunkt ($\gamma$ 50) durchlaufend;
- Bezugs-Längen- und Breitenkreise (M,P) zu definieren auf diesem Himmelsgewölbe;
- ein Bezugssystem (G, X, Y, Z) mit rechtwinkligen Achsen zu definieren, zentriert im Schwerpunkt (G) des Raumfahrzeugs, wobei eine erste Bezugsachse (X) dieses Systems den Frühlingspunkt ($\gamma$ 50) durchläuft, eine zweite Achse (Z) zusammenfällt mit der Polarachse, und eine dritte Achse (Y) rechtwinklig ist zu der ersten und der zweiten Achse;
- ein für das Raumfahrzeug spezifisches Bezugssystem (G,$X_A$, $Y_A$, $Z_A$) zu definieren, mit drei rechtwinkligen Achsen, die den Schwerpunkt (G) des Raumfahrzeugs zum Nullpunkt haben, eine erste Achse ($X_A$), ausgerichtet entsprechend einer Längsachse des Raumfahrzeugs, eine zweite Achse ($Z_A$), in einer Symetrieebene liegend, die durch die Längsachse des Raumfahrzeugs verläuft, eine dritte Achse ($Y_A$), rechtwinklig zur ersten und zweiten Achse des spezifischen Bezugssystems;
- die Lage des Raumfahrzeugs zu definieren durch Berechnung des Roll($\varphi$)-, Nick($\theta$)- und Scherwinkels ($\psi$) des Raumfahrzeugs bezüglich des Bezugssystems (G, X, Y, Z);
- die Kardanwinkel ( $\varphi$, $\theta$, $\psi$ ) zu verwenden, um auf einem Bildschirm (1) der Anzeigemittel (2) das erhaltene Bild sichtbar zu machen in einer zu der ersten spezifischen Achse ($X_A$) senkrechten Ebene eines Gradnetzes, gebildet aus Abschnitten der Längen- und Breitenkreise (M, P) des Himmelsgewölbes, projiziert auf diese Ebene im Inneren eines Navigationskreises (B), sichtbar gemacht auf dem Bildschirm (1) und zentriert auf der ersten Achse ($X_A$) des spezifischen Bezugssystems;
- ein Fadenkreuz (7, 8, 9) sichtbar zu machen, mit zwei senkrechten Segmenten (7, 8), den Navigationskreis durchschneidend, sich schneidend im Zentrum (O) des Navigationskreises (B), und der zweiten bzw. der dritten Achse des spezifischen Bezugssystems entsprechend, wobei das Zentum (0) des Navigationskreises die Lage des Raumfahrzeugs (A) darstellt, festgelegt in Länge und Breite, jeweils bezüglich eines Längenkreisabschnitts (M) und eines Breitenkreisabschnitts (P) des Gradnetzes;
- den Wert des Rollwinkels ($\varphi$) an einer Skala mit Zahlenwerten (10) sichtbar zu machen, nahe der Durchschneidung des Navigationskreises (B) mit dem Segment (7) des Fadenkreuzes entsprechend der zweiten Achse ($Z_A$) des spezifischen Bezugssystems.

2. Verfahren nach Anspruch 1, dadurch gekennzeichnet, daß es darin besteht, in einer vorbestimmte kreisförmige Zone (5) um jeden Pol des Himmelsgewölbes die Anzeige eines Gradnetzes aus Längenkreis- und Breitenkreisabschnitten des Himmelsgewölbes zu ersetzen durch ein Gradnetz, das einen Bezugsraster bildet im Innern eines Kreises (6), der die genannte Zone begrenzt.

3. Verfahren nach Anspruch 2, dadurch gekennzeichnet, daß es darin besteht, die Kardanwinkel ($\varphi$,$\theta$,$\psi$) in Form von Quaternionen auszudrücken.

4. Verfahren nach Anspruch 3, dadurch gekennzeichnet, daß es darin besteht, durch ein Symbol (V1) in dem Gradnetz den Ort am Himmelsgewölbe anzuzeigen, auf den ein Vektor gerichtet ist, der die Geschwindigkeit des Raumfahrzeugs (A) darstellt, wobei dieses Symbol in dem Gradnetz festgelegt ist in Länge und Breite, um den Schiebe- bzw. den Anstellwinkel des Raumfahrzeugs anzugeben.

5. Verfahren nach Anspruch 3, dadurch gekennzeichnet, daß es darin besteht, die Position eines anderen Objekts im Raum anzuzeigen durch ein für dieses Objekt kennzeichnendes Symbol (11), festgelegt in dem Gradnetz durch eine Länge und eine Breite, dieser Position entsprechend.

6. Verfahren nach Anspruch 3, dadurch gekennzeichnet, daß es darin besteht, einen weiteren Vektor (12) der kurzfristigen Vorhersage der Lage des Raumfahrzeugs anzuzeigen.

7. Verfahren nach Anspruch 3, dadurch gekennzeichnet, daß es darin besteht, die gewählte Lage des Raumfahrzeugs anzuzeigen durch ein Lagesymbol (13), festgelegt in dem Gradnetz durch eine Länge und eine Breite.

8. Verfahren nach Anspruch 3, dadurch gekennzeichnet, daß es außerdem darin besteht, auf besondere Weise ein Nullmeridian-Teilstück (14, 15) unter den in dem Gradnetz angezeigten Meridianteilstücken anzuzeigen.

**9.** Verfahren nach Anspruch 8, dadurch gekennzeichnet, daß es außerdem darin besteht, zwei Bezugssymbole (17, 18) des Rollwinkels ($\varphi$ ) anzuzeigen, diametral entgegengesetzt an dem Navigationskreis (B), und an dem Navigationskreis ein Zwischensymbol (19) des gewählten Rollwinkels anzuzeigen.

**10.** Verfahren nach Anspruch 3, dadurch gekennzeichnet, daß es darin besteht, numerische Werte der Roll-, Nick- und Schergeschwindigkeiten (p, q, r) anzuzeigen in den Cursors (19, 21, 23), beweglich gegenüber den feststehenden Skalen mit Zahlenwerten (20, 22, 24).

**11.** Verfahren nach Anspruch 3, dadurch gekennzeichnet, daß es darin besteht, die jeweiligen numerischen Werte (25) des Roll-, Nick- und Scherwinkels ($\varphi,\theta,\psi$ ) anzuzeigen.

**12.** Verfahren nach Anspruch 11, dadurch gekennzeichnet, daß es darin besteht, numerische Einstellwerte (26) jeweils des Roll-, Nick- und Scherwinkels anzuzeigen.

**13.** Verfahren nach einem der vorhergehenden Ansprüche, dadurch gekennzeichnet, daß es darin besteht, den verschiedenen angezeigten Angaben Codes mit spezifischen Farben zuzuordnen.


**Claims**

**1.** Process for the display of an aircraft or spacecraft for aiding piloting or flying in space, characterized in that it comprises:
defining a spherical celestial canopy (C) centered on the centre of gravity (G) of the aircraft (A), having a polar axis oriented towards the celestial north (N) and an equatorial plane (E) perpendicular to said polar axis and passing through a vernal reference marking point ($\gamma$ 50);
defining reference marking parallels (M,P) and meridians on said celestial canopy;
defining a reference mark (G,X,Y,Z) with orthogonal axes centered on the centre of gravity (G) of the aircraft, a first axis (X) of said mark passing through the vernal point ($\gamma$ 50), a second axis (2) coinciding with the polar axis and a third axis (Y) being perpendicular to the first and second axes;
defining a specific reference mark (G, $X_A$, $Y_A$, $Z_A$) of the aircraft with three orthogonal axes, having for its origin the centre of gravity (G) of the aircraft, a first axis ($X_A$) directed along a longitudinal axis of the air-craft, a second axis ($Z_A$) located in a plane of symmetry passing through the longitudinal axis of the aircraft and a third axis ($Y_A$) perpendicular to the first and second axes of the specific reference mark;
defining the attitude of the aircraft by calculating the cardan angles, (roll ($\varphi$), pitch ($\theta$) and yaw ($\psi$) of the aircraft with respect to the reference mark (G,X,Y,Z); using the values of the cardan angles ($\varphi,\theta,\psi$) for displaying, on a screen (1) of display means (2), the image obtained in a plane perpendicular to the first specific axis ($X_A$) of a net formed from portions of meridians and parallels (M,P) of the celestial canopy projected onto said plane within a piloting or flying circle (B), displayed on the screen (1) and centered on the first axis ($X_A$) of the specific reference mark;
displaying a cruciform reticule (7,8,9) with two perpendicular segments (7,8) intersecting the flying circle, intersecting in the centre (O) of the circle (B) and corresponding respectively to the second and third axes ($Z_A$, $Y_A$) of the specific reference mark, the centre (O) of the circle respectively representing the yaw and pitch angles referenced in longitude and latitude, respectively with respect to a meridian portion (M) and a parallel portion (P) of the net;
and displaying the value of the roll angle ($\varphi$) in a scale (10) of numerical values, close to the intersection of the flying circle (B) with the segment (7) of the reticule corresponding to the second axis ($Z_A$) of the specific reference mark.

**2.** Process according to claim 1, characterized in that, in a predetermined circular zone (5) around each pole of the celestial canopy, it consists of replacing the display of a net of portions of meridians and parallels of the celestial canopy by a net forming a reference grid within a circle (6) defining said zone.

**3.** Process according to claim 2, characterized in that it consists of expressing the cardan angles ($\varphi$, $\theta,\psi$) in the form of quaternions.

**4.** Process according to claim 3, characterized in that it consists of displaying by a symbol (V1) in the net, the location pointed on the celestial canopy by a vector representing the speed of the aircraft (A), said symbol being referenced in the net in longitude and latitude, for respectively indicating the sideslip and incidence angles of the aircraft.

5. Process according to claim 3, characterized in that it consists of displaying the position of another object in space by a symbol (11) characterizing said object referenced in the net by a longitude and a latitude corresponding to said position.

6. Process according to claim 3, characterized in that it consists of also displaying a short term prediction vector (12) of the aircraft attitude.

7. Process according to claim 3, characterized in that it consists of displaying the selected attitude of the air-craft by an attitude symbol (13) referenced in the net by a longitude and a latitude.

8. Process according to claim 3, characterized in that it also consists of displaying in a particular manner an original meridian portion (14,15) from among the meridian portions displayed in the net.

9. Process according to claim 8, characterized in that it also consists of displaying two reference symbols (17,18) of the roll angle ($\varphi$), which are diametrically opposite on the flying circle (B), as well as displaying on said flying circle an intermediate symbol (19) with a selected roll angle.

10. Process according to claim 3, characterized in that it consists of displaying respectively numerical roll, pitch and yaw velocity values (p,q,r) in cursors (19,21,23), which move relative to fixed numerical value scales (20,22, 24).

11. Process according to claim 3, characterized in that it consists of displaying the respective numerical values (25) of the roll, pitch and yaw angles ($\varphi,\theta,\psi$).

12. Process according to claim 11, characterized in that it consists of displaying nominal numerical values (26) respectively for the roll, pitch and yaw angles.

13. Process according to any one of the preceding claims, characterized in that it consists of allocating specific colour codes to the different informations displayed.

FIG. 1

EP 0 431 997 B1

FIG. 2

EP 0 431 997 B1

FIG. 3

FIG. 5

C

P

M

XA

YA

ZA

B

3

1

4

2

α

S

28 29 30 2

FIG. 4